# EUROPEAN PATENT SPECIFICATION

(11) **EP 1 756 480 B1**
(45) Date of publication and mention of the grant of the patent: **04.01.2017**
(21) Application number: 05740668.8
(22) Date of filing: 28.04.2005
(51) Int. Cl.: F24F 5/00

(54) **ENTHALPY EXCHANGER AND METHOD FOR EXCHANGING ENTHALPY BETWEEN TWO MEDIA BY MEANS OF SUCH AN ENTHALPY EXCHANGER**
ENTHALPIETAUSCHER UND VERFAHREN ZUM ENTHALPIETAUSCH ZWISCHEN ZWEI MEDIEN MITTELS SOLCH EINES ENTHALPIETAUSCHERS
ECHANGEUR ENTHALPIQUE ET PROCEDE PERMETTANT L'ECHANGE ENTHALPIQUE ENTRE DEUX MILIEUX VIA LEDIT ECHANGEUR ENTHALPIQUE

(30) Priority: 03.05.2004 NL 1026096
(43) Date of publication of application: 28.02.2007
(73) Proprietor: Statiqcooling B.V., 7463 PL Rijssen (NL)
(72) Inventor: UGES, Peter, Gerard, Hans, NL-1017 JW Amsterdam (NL)
(74) Representative: Van den Heuvel, Henricus Theodorus
(86) International application number: PCT/NL2005/000319
(87) International publication number: WO 2005/106343

(56) References cited:
- EP-A- 0 678 321
- WO-A-00/11422
- WO-A-99/41552
- WO-A-03/016808
- BE-A6- 1 013 160
- DE-A1- 2 528 507
- GB-A- 2 293 230
- NL-C1- 1 010 758
- US-A- 1 808 982
- US-A- 2 107 280
- US-A- 2 209 999
- US-A- 2 218 407
- US-A- 2 259 541
- US-A- 2 766 597
- US-A- 2 990 696
- US-A- 4 246 962

## Description

The invention relates to an enthalpy exchanger for dewpoint cooling, comprising: at least one heat-conducting separating wall, along both contact sides of which a first liquid medium and a second medium can be respectively displaced while exchanging enthalpy, and at least one hygroscopic material layer which connects to at least one contact side of the separating wall in contact with the first liquid medium, wherein the mutual orientation of the separating wall and the material layer is such that a liquid film of the first medium can form between the separating wall and the material layer, wherein the liquid film is in enthalpy-exchanging contact with both the separating wall and the material layer, and pressing means engaging on a side of the material layer remote from the separating wall for pressing the material layer against the separating wall such that the liquid film can extend substantially unobstructed over substantially the whole contact side of the separating wall. The invention also relates to a method for dewpoint cooling based enthalpy exchange between a first liquid medium and a second medium using such an enthalpy exchanger.

Intentional enthalpy exchange between two media has been applied for several thousand years. It was thus already known in antiquity that liquids, particularly drinks, could be kept cool in unglazed (permeable) pitchers. Through transpiration of the pitcher the liquid present on the exterior of the pitcher was evaporated, whereby heat was extracted from the pitcher and thereby from the liquid. Particularly in recent decades the techniques for cooling media, in particular airflows, have made considerable progress. A current technique for cooling airflows is to guide air for cooling directly along a moist surface. The heat required for evaporation of the water that is present is herein extracted from the airflow, whereby the temperature of this latter falls. This technique is also referred to as direct evaporation cooling or as wet-bulb cooling. The drawback of direct evaporation cooling is that the evaporated moisture enters the airflow, whereby the relative humidity will generally increase sharply and usually result in fungal growth on goods in the close vicinity. The above stated drawbacks can be prevented by cooling the airflow without wetting it directly. Such a technique is usually referred to as (indirect) dewpoint cooling. In dewpoint cooling the heat required for cooling the air is extracted from the airflow indirectly, i.e. via one or more separating walls of the enthalpy exchanger, without condensation herein occurring of the moisture present in the airflow. Recently developed systems based on this technique of dewpoint cooling make use of an enthalpy exchanger of the type stated in the preamble, wherein an adhesive layer is applied between the separating wall and the hygroscopic material layer in order to be able to realize a good connection of the material layer to the separating wall. To this end the adhesive layer is applied over the whole, or at least almost the whole contact side of the separating wall. A great drawback of the known enthalpy exchanger is that the adhesive layer has a strong insulating power and thereby generally impedes the enthalpy exchange considerably. The application of the adhesive layer must furthermore take place very accurately. Excess adhesive will generally be absorbed by the hygroscopic layer, which will significantly reduce the hygroscopicity of the material layer, and thereby the enthalpy-exchanging capacity of the enthalpy exchanger. Merely omitting the adhesive layer in the known enthalpy exchanger will however result in the material layer detaching from the contact side of the separating wall, whereby formation of a liquid film cannot be realized, or hardly so. It is particularly during a period that the material layer is dry that the material layer will expand and detach from the contact side of the separating wall such that a liquid film can no longer form after renewed wetting of the enthalpy exchanger, which therefore results in a significant reduction in enthalpy-exchanging capacity. An improved enthalpy exchanger is disclosed in US 2,209,999, said enthalpy exchanger additionally comprising pressing means engaging on a side of the material layer remote from the separating wall for pressing the material layer against the separating wall such that the liquid film can extend substantially unobstructed over substantially the whole contact side of the separating wall. Application of these pressing means leads to an improved contact between the material layer and the separating wall, and hence to an increased enthalpy-exchanging capacity. To further improve the enthalpy-exchanging capacity, the known enthalpy exchanger comprises a housing in which multiple heat-conducting separating walls are positioned, wherein each separating wall is covered partially by a hygroscopic material. The mutual orientation of the separating walls is substantially fixed by the housing. A major drawback of the known enthalpy exchanger is that the construction of the known enthalpy exchanger is relatively complex, relatively uneconomical, and hence relatively inefficient.

The invention has for its object to provide an improved enthalpy exchanger.

The invention provides for this purpose an enthalpy exchanger of the type stated in the preamble, characterized in that the pressing means comprise a plurality of pressing elements, wherein at least a part of the number of pressing elements is attached simultaneously to a plurality of separating walls. By applying a plurality of separating walls positioned at a distance from each other, the second medium can be cooled in relatively rapid, intensive and efficient manner. The pressing means are coupled to the material layer so as to be able to guarantee the (desired) permanent connection of the material layer to the corresponding contact side of the separating wall. The attachment of the pressing means to the material layer can take place in a number of ways. The pressing means can thus be coupled for instance by means of an adhesive layer to the material layer, wherein the adhesive layer can for instance be formed by an acrylate adhesive, by Sabaspray FR AV or by a polymer mastic. In addition, the material layer can also be attached by means of mechanical fixing means. It is also possible to envisage connecting the pressing means - generally made of plastic such as PE and/or PP - by means of ultrasonic welding to the material layer. The enthalpy exchanger can moreover then be constructed in structurally relatively simple and efficient manner.

The pressing means herein exert a force on the material layer which is directed toward the separating wall. The pressing means prevent the material layer to some extent become limp and in particular move during operation, which would drastically reduce the heat transfer, especially after drying out of the liquid film. By making the material layer lie permanently against the separating wall by means of the pressing means the liquid film can be maintained permanently and in stable manner because a continuous supply of liquid through the material layer is possible. By pressing the material layer against the separating wall excessive detachment of (determined parts of) the material layer relative to the separating wall can thus be prevented, as a consequence of which the material layer and the separating wall are adapted for permanent co-action to enable the creation between the material layer and the separating wall of the liquid film which can extend unobstructed over substantially the whole contact side of the separating wall. A momentary fall-off of liquid, and thus non-formation of a liquid film, for instance following a dry period, can be prevented by applying an enthalpy exchanger according to the invention. The material layer preferably lies substantially unattached against the contact side of the separating wall, whereby the liquid film can extend unobstructed and uninterrupted, and in particular with a substantially uniform thickness, between the material layer and the contact side of the separating wall. The pressing means are adapted to substantially fix the relative orientation between the separating wall and the material layer without an (undesired) physical coupling being arranged between the material layer and the contact side. In order to enable a substantially homogeneous pressing of the material layer against the separating wall to be realized, the material layer is preferably pressed peripherally as well as centrally against the contact side. The pressing here has to be such that on the one hand formation of a liquid film between the material layer and the separating wall is not impeded, but that on the other hand excessive detachment of the material layer relative to the separating wall can be prevented.

The pressing means can be of very diverse nature, but are preferably adapted for homogeneous pressing of the material layer against the contact side. The pressing means can herein for instance comprises a grid, but it is likewise possible to envisage pressing the material layer against the separating wall by means of one or more cords. In a preferred embodiment, the pressing means are formed by one of more guide strips for guiding a gaseous medium flowing along the material layer. The multi-functional guide strips are hereby adapted on the one hand to press the hygroscopic material layer against the contact side, whereby a liquid film can form in permanent and unobstructed manner between the material layer and the separating wall, and are adapted on the other to guide the gaseous medium. The gaseous medium can herein be formed by at least a part of the second medium already guided along the separating wall.

The gaseous medium will usually be formed by a fraction of the second medium. This fraction is then guided, after cooling of the second medium, along the evaporated moisture in order to entrain the moisture from the enthalpy exchanger and thus enable liquid for evaporating to be supplied to the enthalpy exchanger. The guide strips are preferably fixed to the material layer. A uniform and optimal distribution of the guide strips over the material layer can thus be guaranteed.

A wall surface of the separating wall directed toward the material layer preferably takes a substantially flat form. In this way a permanent co-action of the material layer with the separating wall can be maintained in relatively simple manner, whereby the use of a flat contact side is relatively advantageous. The second medium, usually formed by an airflow, can moreover be brought in relatively intensive manner into contact with a side of the separating wall remote from the material layer.

By causing a liquid film to be present between the separating wall and the material layer an optimal, (practically) unobstructed heat transfer can take place between the two media. The material layer herein in fact floats as cover layer on the liquid film, while through adhesion the liquid film is in full and intensive contact with both the separating wall and the material layer. The advantage is that the enthalpy to be exchanged no longer has to be transported through an insulating adhesive layer, but that both media are only separated by the heat-conducting separating wall. The second medium can herein be gaseous as well as liquid, although the second medium will generally be formed by an airflow for cooling. The material layer preferably lies substantially unattached against the contact side of the separating wall, so that the liquid film can extend unobstructed over substantially the whole contact side of the separating wall. Heat can thus be transferred at any location on the separating wall in optimal, unimpeded manner. Since a final temperature for heating or cooling is usually set as precondition, the residence time of the second medium in the enthalpy exchanger can be reduced considerably because of the relatively high energy efficiency. In order to prevent the material layer detaching from the separating wall, the material layer is preferably attached to the separating wall, in particular to a side of the separating wall other than the contact sides, so as to thus prevent any obstruction to the heat transfer between the two media.

In a preferred embodiment, the material layer is tensioned over the contact side of the separating wall. Such a tensioned state of the material layer will occur particularly after wetting of the material layer, as the material layer will usually be formed by a cloth and/or a fleece which shrinks when wetted. The advantage of tensioning the material layer over the contact side of the separating wall is that a permanent, reliable and stable connection of the material layer to the separating wall can be guaranteed, whereby the heat transfer over the whole separating wall can be of uniform and permanent nature.

In another preferred embodiment, the material layer encloses the separating wall on two sides. To this end the material layer can cover the separating wall as an endless sleeve. The advantage of such a sleeve is that no chemical and/or mechanical fastening means at all are required to fix the relative orientation between the separating wall and the material layer. The second medium can moreover also be formed by a liquid, whereby a second liquid film can be formed, which can optimize the heat transfer between the two liquids.

In yet another preferred embodiment, the separating wall forms at least one channel around which the material layer is arranged. The channel is herein adapted for passage of the second medium. The material layer is arranged against an exterior peripheral side of the channel. The separating wall can be formed in this preferred embodiment by a tube or pipe which is at least partially covered by a material layer. The separating wall can however also be embodied as a channel structure provided with a plurality of channels for passage of the second medium.

The material layer is preferably attached to or close to one or more longitudinal edges of the separating wall. The longitudinal edges or narrow (peripheral) longitudinal sides of the separating wall generally do no contribute, or at least not essentially, toward the enthalpy exchange between the two media. These longitudinal edges or longitudinal sides can thereby be used relatively efficiently for attachment of the material layer to enable fixing of the relative orientation between the separating wall and the material layer, wherein an unobstructed formation and transport of the liquid film between the separating wall and the material layer can remain ensured.

The material layer is preferably attached to a frame enclosing the separating wall. By attaching the material layer to a separate frame, whereafter the material layer is positioned against the separating wall, or vice versa, a properly operating enthalpy exchanger can also be provided according to the invention which makes use of an advantageous intermediary liquid flm.

In a preferred embodiment, the material layer is formed by a woven fabric. The covering of the separating wall with a textile layer provides the hygroscopic properties required for proper functioning of the enthalpy exchanger. A textile layer or woven fabric absorbs relatively quickly and intensively a quantity of liquid, usually water, in penetrating manner and can relinquish this absorbed liquid again relatively quickly for the purpose of forming the liquid film. The woven fabric can be manufactured from diverse materials, such as for instance cotton, linen, plastic, ceramic material or metallic material. It is also possible to envisage applying non-wovens, such as for instance an open cell structure, as material layer. The material layer (and the separating wall) can take a flexible form but can also have a certain rigidity.

The invention also relates to a method for enthalpy exchange between a first liquid medium and a second medium using an enthalpy exchanger according to any of claims 1 - 10, the method comprising the steps of: a) the method comprising the steps of: a) pressing the material layer against the separating wall, b) wetting the hygroscopic material layer by means of a first liquid medium, c) causing a liquid film to be formed between the material layer and a contact side of the separating wall, and d) causing a second medium to flow along a contact side of the separating wall remote from the material layer, whereby enthalpy exchange between the first medium and the second medium can take place via the separating wall and the liquid film. As described at length in the foregoing, the formation of the intermediary liquid film is of great importance in enabling the realization of an optimal heat transfer. In addition, the liquid film can preferably extend over the whole contact surface so as to further maximize this heat transfer. Direct and unobstructed formation of a liquid film is made possible by pressing the cloth firstly, and preferably permanently, by means of pressing means against the separating wall as according to step a). This is because situating at least a part of the material layer at a distance from the separating wall would prevent the formation of a liquid film as a consequence of drying, and thereby expansion, of the material layer, wherein supplied liquid would fall off relatively quickly, whereby efficient enthalpy exchange between the liquid and the second medium would not be possible. The second medium will generally be gaseous, so that the enthalpy exchanger can be applied as air-conditioning in industrial or private premises. The enthalpy exchanger can also be applied as industrial device for cooling industrial process gases, such as for instance in cooling towers.

Heat is preferably extracted from the second medium during performing of the method, this heat being substantially transferred to the first medium. The second medium, usually an airflow, can thus be cooled before this airflow can be admitted into a space or the outside air.

In a preferred embodiment, a fraction of the second medium is guided, after the enthalpy exchange, along the hygroscopic layer via the separating wall and the liquid film. As already described in the foregoing, the evaporated moisture can thus be discharged and is replaced by liquid for evaporating in order to enable the capacity of the enthalpy exchanger to be utilized to maximum extent.

The invention will be elucidated with reference to non-limitative exemplary embodiments shown in the following figures. Herein:
figure 1 shows a schematic view of a dewpoint cooling process applied in an enthalpy exchanger according to the invention,
figure 2 shows a perspective view of an enthalpy exchanger according to the invention,
figures 3a and 3b show schematic cross-sections of a plurality of enthalpy exchangers ,
figure 4a shows a schematic cross-section of a part of another enthalpy exchanger according to the invention, and
figure 4b shows a cross-section of the enthalpy exchanger of figure 4a.

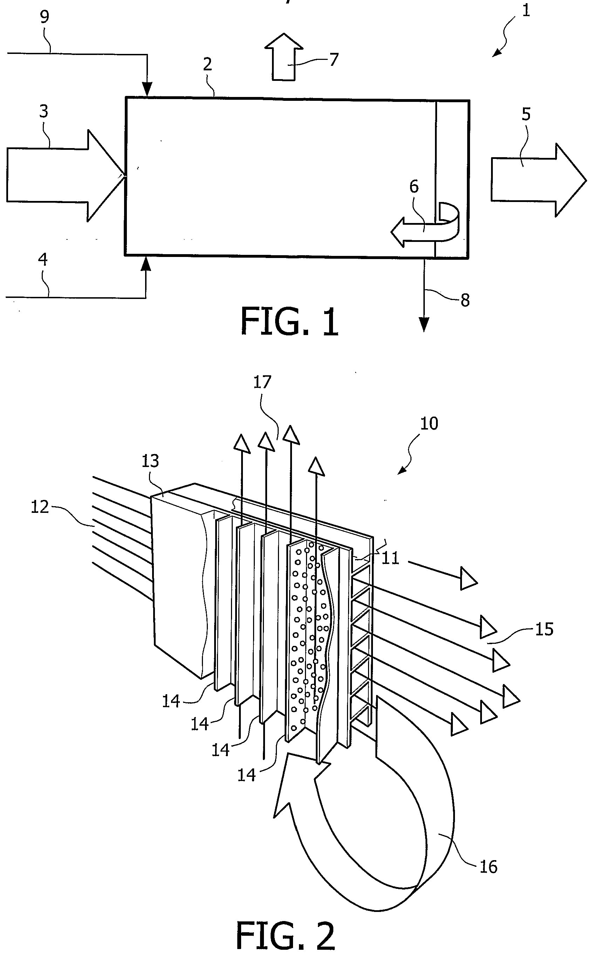

Figure 1 shows a schematic view of a dewpoint cooling process 1 applied in an enthalpy exchanger 2 according to the invention. A relatively warm airflow 3 of about 28EC with a relative humidity of 50% is fed to enthalpy exchanger 2. Separately of airflow 3 a correct quantity of water 4 is also guided into enthalpy exchanger 2 to enable indirect cooling, via a separating wall (not shown), of the relatively warm airflow 3. The separating wall is herein covered on one side by a cover layer between which a film layer will form through adhesion of the water 4 in order to optimize heat transfer. After airflow 3 has passed through exchanger 2, a large part of the cooled airflow 5 is guided out of exchanger 2 at a temperature of about 18.5EC and can further be used efficiently as conditioned air for air-conditioning or industrial cooling. A fraction of the cooled airflow 6 will be fed back into exchanger 2 in order to absorb and thus discharge the evaporated moisture from enthalpy exchanger 2 as relatively warm process flow 7. Excess water can be removed from exchanger 2 via a drainage flow 8. Electricity 9 must also be fed to exchanger 2 in order to enable airflow 3 to be actively guided through exchanger 2.

Figure 2 is a perspective view of an enthalpy exchanger 10 according to the invention. Enthalpy exchanger 10 functions in accordance with the dewpoint cooling process 1 as shown in figure 1. Exchanger 10 comprises a channelled separating wall 11 for passage of an airflow 12 for cooling. An outer side of exchanger 10 is covered with a hygroscopic cover layer 13. In order to allow permanent connection of cover layer 13 to separating wall 11, exchanger 10 is provided with a plurality of equidistant guide strips 14. Cover layer 13 only lies against the separating wall and is not attached to separating wall 11. A liquid film can thereby form between cover layer 13 and separating wall 11, which film can extend over practically the whole surface of separating wall 11 directed toward cover layer 13 in order to optimize the heat transfer between airflow 12 and the liquid. Figure 2 also shows that a fraction 16 of the cooled airflow 15 is fed back along cover layer 13. Guide strips 14 herein guide the air along the evaporated liquid to enable an efficient absorption of this evaporated liquid to take place, wherein the moistened air can be removed from the exchanger as warm process flow 17.

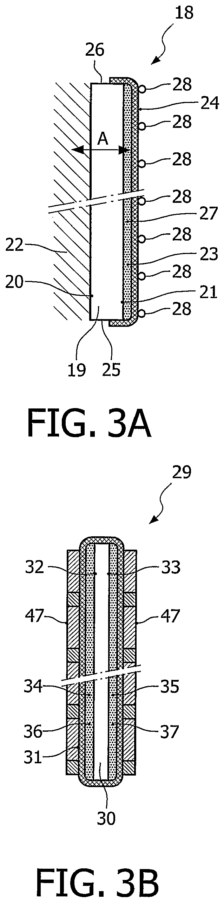

Figure 3a shows a schematic cross-section of an enthalpy exchanger 18. Enthalpy exchanger 18 comprises a heat-conducting wall 19, along both contact sides 20, 21 of which flow two respective media, an airflow 22 for cooling and a liquid 23 adapted to extract heat from airflow 22. Wall 19 is covered on one side by a hygroscopic cloth 24, wherein cloth 24 is fixed only to a lower and upper peripheral longitudinal side 25, 26 of wall 19. Cloth 24 is wetted from an underside or a top side, wherein the liquid will spread over the whole cloth 24 via capillary action or downward penetration. Cloth 24 is preferably folded round the wall 19 at or close to the wetting location to enable optimal wetting of cloth 24. In the shown orientation of cloth 24 the wetting can therefore take place at or close to the underside 25 as well as at or close to the top side 26. A liquid film 27 will form between wall 19 and cloth 24 which is in contact with both wall 19 and the moist cloth 24. By having the airflow 22 flow along wall 19, liquid film 27 will extract heat from airflow 22 and thus be able to evaporate, which results in cooling of airflow 22 (see arrow A). Liquid film 27 will be maintained by permanent supply of fresh liquid from cloth 24. In this way an airflow 22 can be cooled in relatively efficient and effective manner without the airflow 22 herein being moistened by the cooling medium, i.e. liquid (film) 23, 27. In order to have the cloth 24 lie (permanently) well and in unattached manner against contact side 21 of wall 19, to thus make possible the forming of liquid film 27, cloth 24 is pressed against wall 19 by means of a plurality of tensioned wires 28. Wires 28 can herein be manufactured from for instance metal and/or plastic. Wires 28 do not necessarily need to be physically connected to cloth 24 here.

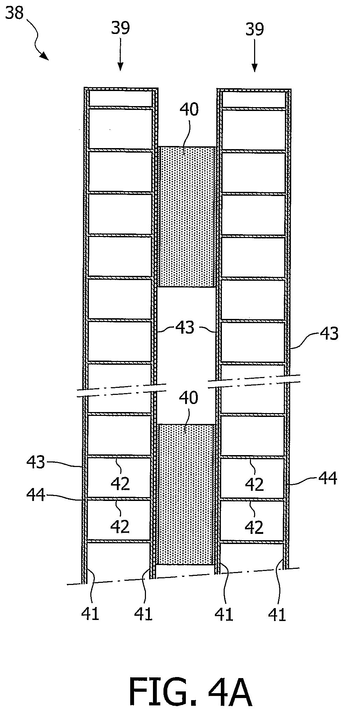

Figure 3b shows a schematic cross-section of another enthalpy exchanger 29. Enthalpy exchanger 29 comprises a heat-conducting panel 30 around which a hygroscopic sleeve 31 is arranged. A primary liquid 34 for cooling and a cooling secondary liquid 35 flow respectively along the two opposite contact sides 32, 33 of panel 30. Both liquids 34, 35 are absorbed by sleeve 31, wherein a liquid film 36, 37 of the relevant liquid 34, 35 is formed between sleeve 31 and each contact side 32, 33 and is in intensive and permanent mutual contact via the full contact side 32, 33 of panel 30. Heat can thus be extracted in intensive and efficient manner by the secondary liquid 35 from primary liquid 34, which can thus be cooled. The heat-exchanging surface area is herein maximized. Sleeve 31 is pressed by means of grids 47 against contact sides 32, 33 of panel 30 in order to facilitate forming of liquid film 36, 37. Figure 4a shows a schematic cross-section of a part of another enthalpy exchanger 38 according to the invention. Exchanger 38 comprises two channel structures 39, these channel structures 39 being held at a mutual distance by a plurality of guide strips 40. Each channel structure 39 is constructed from two upright heat-conducting plates 41 which are substantially parallel to each other and between which a plurality of substantially parallel partitions 42 are arranged to hold the two plates 41 apart. Each channel structure 39 is now adapted for passage of air for cooling. A hygroscopic cover 43 is arranged round the assembly of plates 41, wherein cover 43 fits relatively closely round plates 41 without being attached to upright plates 41. After wetting of cover 43 with a cooling liquid, in particular water, a liquid film 44 will form between upright plates 41 and cover 43 as a result of adhesion. As already indicated in the foregoing, heat from the airflow can be relinquished in relatively quick and efficient manner to liquid film 44 via upright plates 41, whereby the airflow can be cooled relatively rapidly to a desired final temperature. A fraction of the cooled airflow is fed back along the covering 43 of the two channel structures 39. Guide strips 40 herein guide the air along the evaporated liquid so as to bring about an efficient absorption of this evaporated liquid, wherein the moistened air will be discharged as relatively warm process flow. In addition to holding the channel structures 39 apart and guiding a return part-flow, guide strips 40 are also adapted to press the coverings 43 against plates 41 on two sides, whereby the liquid film can form in relatively simple and unobstructed manner, irrespective of the initial degree of wetness of covering 43. Guide strips 40 are preferably attached by means of adhesive, mastic or other means, such as for instance mechanical fixing means, to the coverings 43 of corresponding channel structures 39. By making use of a plurality of channel structures 39, in this case two channel structures 39, the enthalpy-exchanging surface area between the airflow for cooling and liquid film 44 can be significantly enlarged, whereby the enthalpy exchange can take place in relatively efficient manner. It will be apparent that it is likewise possible to envisage applying more than two channel structures in an enthalpy exchanger according to the invention.

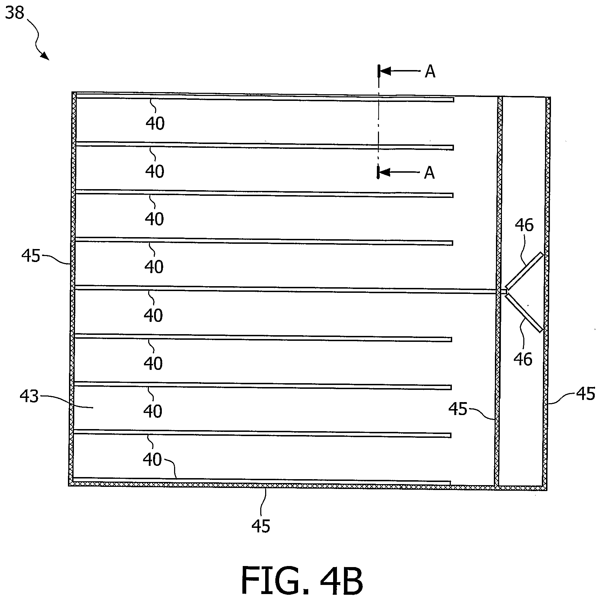

Figure 4b shows a cross-section of the enthalpy exchanger 38 according to the invention of figure 4a, wherein the cross-section shown in figure 4a represents a cross-section along line A-A as shown in figure 4b. Figure 4b shows clearly that guide strips 40 are positioned substantially parallel and above each other in a substantially horizontal orientation. Only on a plurality of (peripheral) longitudinal edges 45 of covering 43, which longitudinal edges 45 are a negligible factor in the forming of liquid film 44, is covering 43 glued to the associated channel structure 39, in order to substantially enable fixing of the relative orientation between channel structure 39 and covering 43. The other part of covering 43 is unattached and so not glued against channel structure 39, whereby a liquid film can form in free and unobstructed manner between covering 43 and channel structure 39, which liquid film will extend over substantially the whole surface of the relevant plate 41 of channel structure 39. As shown, enthalpy exchanger 38 also comprises a plurality of baffles 46 for guiding the returned airflow in a desired direction.

It will be apparent that the invention is not limited to the exemplary embodiments shown and described here, but that within the scope of the appended claims numerous variants are possible which will be self-evident to the skilled person in the field.

## Claims

1. Enthalpy exchanger (10) for dewpoint cooling, comprising:
- at least one heat-conducting separating wall (11,19), along both contact sides on which a first liquid medium (23) and a second medium (22) can be respectively displaced while exchanging enthalpy,
- at least one hygroscopic material layer (24) which connects to at least one contact side of the separating wall (11,19) in contact with the first liquid medium (23), wherein the mutual orientation of the separating wall (11,19) and the material layer (24) is such that a liquid film (27) of the first medium (23) can form between the separating wall (11,19) and the material layer (24), wherein the liquid film (27) is in enthalpy-exchanging contact with both the separating wall (11,19) and the material layer (24), and
- pressing means (40) engaging on a side of the material layer (24) remote from the separating wall (11,19) for pressing the material layer (24) against the separating wall (11,19) such that the liquid film (27) can extend substantially unobstructed over substantially the whole contact side of the separating wall (11,19), wherein the enthalpy exchanger comprises a plurality of separating walls (11,19) positioned at a distance from each other, **characterized in that** the pressing means (40) comprise a plurality of pressing elements (40), wherein at least a part of the number of pressing of elements (40) is attached simultaneously to a plurality of separating walls (11,19).

2. Enthalpy exchanger as claimed in claim 1, **characterized in that** the material layer (24) lies substantially unattached against the contact side of the separating wall (11, 19).

3. Enthalpy exchanger as claimed in claim 1 or 2, **characterized in that** the pressing means (40) are formed by one of more guide strips for guiding a gaseous medium flowing along the material layer (24).

4. Enthalpy exchanger as claimed in any of the foregoing claims, **characterized in that** a wall surface of the separating wall (11,19) directed toward the material layer (24) takes a substantially flat form.

5. Enthalpy exchanger as claimed in any of the foregoing claims, **characterized in that** the material layer (24) is tensioned over the contact side of the separating wall (11,19).

6. Enthalpy exchanger as claimed in any of the foregoing claims, **characterized in that** the material layer (24) encloses the separating wall on two sides.

7. Enthalpy exchanger as claimed in any of the foregoing claims, **characterized in that** the separating wall (11,19) forms at least one channel around which the material layer (24) is arranged.

8. Enthalpy exchanger as claimed in any of the foregoing claims, **characterized in that** the material layer (24) is attached to or close to one or more longitudinal edges of the separating wall (11, 19).

9. Enthalpy exchanger as claimed in any of the foregoing claims, **characterized in that** the material layer (24) is attached to a frame enclosing the separating wall (11,19).

10. Enthalpy exchanger as claimed in any of the foregoing claims, **characterized in that** the material layer (24) is formed by a woven fabric.

11. Method for dewpoint cooling based enthalpy exchange between a first liquid medium (23) and a second medium (22) using an enthalpy exchanger (10) as claimed in any of the claims 1-10, said enthalpy exchanger comprising a plurality of separating walls (11,19) positioned at a distance from each other, and that the pressing means (40) comprise a plurality of pressing elements (40), wherein at least a part of the number of pressing elements (40) walls is attached simultaneously to a plurality of separating walls (11,19), the method comprising the steps of:
a) pressing the material layer (24) against the separating wall (11,19),
b) wetting the hygroscopic material layer (24) by means of a first liquid medium (23),
c) causing a substantially uninterrupted liquid film (27) to be formed between the material layer (24) and a contact side of the separating wall (11,19), and
d) causing a second medium (22) to flow along a contact side of the separating wall (11,19) remote from the material layer (24), whereby enthalpy exchange between the first medium (23) and the second medium (22) can take place via the separating wall (11,19) and the liquid film (27).

12. Method as claimed in claim 11, **characterized in that** the second medium (22) is substantially gaseous.

13. Method as claimed in claim 11 or 12, **characterized in that** heat is extracted from the second medium (22) during performing of the method, this heat being substantially transferred to the first medium (23).

14. Method as claimed in any of the claims 11-13, **characterized in that** a fraction of the second medium (22) is guided, after the enthalpy exchange, along the hygroscopic layer (24) via the separating wall (11,19) and the liquid film (27).

## Patentansprüche

1. Enthalpietauscher (10) zur Taupunktkühlung, aufweisend:
- zumindest eine wärmeleitende Trennwand (11, 19), entlang deren beiden Kontaktseiten ein erstes flüssiges Medium (23) bzw. ein zweites Medium (22) während eines Enthalpietausches verdrängt werden können,
- zumindest eine hygroskopische Materialschicht (24), die mit mindestens einer Kontaktseite der Trennwand (11, 19) in Kontakt mit dem ersten flüssigen Medium (23) verbunden ist, wobei die wechselseitige Ausrichtung der Trennwand (11, 19) und der Materialschicht (24) derart ist, dass sich ein flüssiger Film (27) des ersten Mediums (23) zwischen der Trennwand (11, 19) und der Materialschicht (24) bilden kann, wobei der flüssige Film (27) in Enthalpietauschkontakt sowohl mit der Trennwand (11, 19) als auch der Materialschicht (24) steht, und
- Pressmittel (40), die an einer Seite der Materialschicht (24) fern der Trennwand (11, 19) eingreifen, um die Materialschicht (24) gegen die Trennwand (11, 19) zu pressen, so dass der flüssige Film (27) sich im Wesentlichen ungehindert über im Wesentlichen die gesamte Kontaktseite der Trennwand (11, 19) ausbreiten kann, wobei der Enthalpietauscher mehrere Trennwände (11, 19) aufweist, die mit Abstand zueinander angeordnet sind, **dadurch gekennzeichnet, dass** die Pressmittel (40) mehrere Presselemente (40) aufweisen, wobei zumindest ein Teil der Anzahl von Presselementen (40) gleichzeitig an mehreren Trennwänden (11, 19) befestigt ist.

2. Enthalpietauscher nach Anspruch 1, **dadurch gekennzeichnet, dass** die Materialschicht (24) im Wesentlichen unbefestigt gegen die Kontaktseite der Trennwand (11, 19) liegt.

3. Enthalpietauscher nach Anspruch 1 oder 2, **dadurch gekennzeichnet, dass** die Pressmittel (40) durch einen oder mehrere Leitstreifen zum Leiten eines gasförmigen Mediums, das entlang der Materialschicht (24) strömt, gebildet sind.

4. Enthalpietauscher nach einem der vorangehenden Ansprüche, **dadurch gekennzeichnet, dass** eine Wandfläche der Trennwand (11, 19), die zur Materialschicht (24) gerichtet ist, eine im Wesentlichen flache Form annimmt.

5. Enthalpietauscher nach einem der vorangehenden Ansprüche, **dadurch gekennzeichnet, dass** die Materialschicht (24) über die Kontaktseite der Trennwand (11, 19) gespannt ist.

6. Enthalpietauscher nach einem der vorangehenden Ansprüche, **dadurch gekennzeichnet, dass** die Materialschicht (24) die Trennwand an zwei Seiten umschließt.

7. Enthalpietauscher nach einem der vorangehenden Ansprüche, **dadurch gekennzeichnet, dass** die Trennwand (11, 19) zumindest einen Kanal bildet, um den die Materialschicht (24) angeordnet ist.

8. Enthalpietauscher nach einem der vorangehenden Ansprüche, **dadurch gekennzeichnet, dass** die Materialschicht (24) an oder nahe einem Längsrand oder mehreren Längsrändern der Trennwand (11, 19) befestigt ist.

9. Enthalpietauscher nach einem der vorangehenden Ansprüche, **dadurch gekennzeichnet, dass** die Materialschicht (24) an einem Rahmen befestigt ist, der die Trennwand (11, 19) umschließt.

10. Enthalpietauscher nach einem der vorangehenden Ansprüche, **dadurch gekennzeichnet, dass** die Materialschicht (24) durch ein Gewebe gebildet ist.

11. Verfahren zur Taupunktkühlung auf der Basis eines Enthalpietausches zwischen einem ersten flüssigen Medium (23) und einem zweiten Medium (22) unter Verwendung eines Enthalpietauschers (10) nach einem der Ansprüche 1 - 10, wobei der Enthalpietauscher mehrere Trennwände (11, 19) aufweist, die mit Abstand zueinander angeordnet sind, und die Pressmittel (40) mehrere Presselemente (40) aufweisen, wobei zumindest ein Teil der Anzahl von Presselementen (40) gleichzeitig an mehreren Trennwänden (11, 19) befestigt ist, wobei das Verfahren die Schritte aufweist:
a) Pressen der Materialschicht (24) gegen die Trennwand (11, 19),
b) Benetzen der hygroskopischen Materialschicht (24) mit einem ersten flüssigen Medium (23),
c) Veranlassen, dass sich ein im Wesentlichen ununterbrochener flüssiger Film (27) zwischen der Materialschicht (24) und einer Kontaktseite der Trennwand (11, 19) bildet, und
d) Veranlassen, dass ein zweites Medium (22) entlang einer Kontaktseite der Trennwand (11, 19) fern der Materialschicht (24) strömt, wodurch ein Enthalpietausch zwischen dem ersten Medium (23) und dem zweiten Medium (22) über die Trennwand (11, 19) und den flüssigen Film (27) erfolgen kann.

12. Verfahren nach Anspruch 11, **dadurch gekennzeichnet, dass** das zweite Medium (22) im Wesentlichen gasförmig ist.

13. Verfahren nach Anspruch 11 oder 12, **dadurch gekennzeichnet, dass** während der Durchführung des Verfahrens Wärme vom zweiten Medium (22) extrahiert wird, wobei diese Wärme im Wesentlichen zum ersten Medium (23) überführt wird.

14. Verfahren nach einem der Ansprüche 11 - 13, **dadurch gekennzeichnet, dass** ein Bruchteil des zweiten Mediums (22) nach dem Enthalpietausch entlang der hygroskopischen Schicht (24) über die Trennwand (11, 19) und den flüssigen Film (27) geleitet wird.

## Revendications

1. Echangeur enthalpique (10) pour un refroidissement au point de rosée, comprenant:
- au moins une paroi de séparation conductrice de chaleur (11, 19), le long des deux côtés de contact sur lesquels un premier milieu liquide (23) et un second milieu liquide (22) peuvent être déplacés respectivement pendant un échange d'enthalpie,
- au moins une couche de matériau hygroscopique (24) qui se connecte à au moins un côté de contact de la paroi de séparation (11, 19) en contact avec le premier milieu liquide (23), dans lequel l'orientation mutuelle de la paroi de séparation (11, 19) et de la couche de matériau (24) est telle qu'un film de liquide (27) du premier milieu (23) puisse se former entre la paroi de séparation (11, 19) et la couche de matériau (24), dans lequel le film de liquide (27) se trouve en contact d'échange enthalpique à la fois avec la paroi de séparation (11, 19) et avec la couche de matériau (24), et
- des moyens de pressage (40) qui s'engagent sur un côté de la couche de matériau (24) à distance de la paroi de séparation (11, 19) afin de presser la couche de matériau (24) contre la paroi de séparation (11, 19), de telle sorte que le film de liquide (27) puisse s'étendre sensiblement sans être entravé sur sensiblement la totalité du côté de contact de la paroi de séparation (11, 19),
dans lequel l'échangeur enthalpique comprend une pluralité de parois de séparation (11, 19) positionnées à une distance les unes des autres,
**caractérisé en ce que** les moyens de pressage (40) comprennent une pluralité d'éléments de pressage (40), dans lequel au moins une partie du nombre d'éléments de pressage (40) sont attachés simultanément à une pluralité de parois de séparation (11, 19).

2. Echangeur enthalpique selon la revendication 1, **caractérisé en ce que** la couche de matériau (24) s'étend sensiblement sans être attachée contre le côté de contact de la paroi de séparation (11, 19).

3. Echangeur enthalpique selon la revendication 1 ou 2, **caractérisé en ce que** les moyens de pressage (40) sont formés par une ou plusieurs bande(s) de guidage servant à guider un milieu gazeux qui s'écoule le long de la couche de matériau (24).

4. Echangeur enthalpique selon l'une quelconque des revendications précédentes, **caractérisé en ce qu'**une surface de paroi de la paroi de séparation (11, 19) orientée en direction de la couche de matériau (24) adopte une forme sensiblement plate.

5. Echangeur enthalpique selon l'une quelconque des revendications précédentes, **caractérisé en ce que** la couche de matériau (24) est tendue sur le côté de contact de la paroi de séparation (11, 19).

6. Echangeur enthalpique selon l'une quelconque des revendications précédentes, **caractérisé en ce que** la couche de matériau (24) entoure la paroi de séparation sur deux côtés.

7. Echangeur enthalpique selon l'une quelconque des revendications précédentes, **caractérisé en ce que** la paroi de séparation (11, 19) forme au moins un canal autour duquel la couche de matériau (24) est agencée.

8. Echangeur enthalpique selon l'une quelconque des revendications précédentes, **caractérisé en ce que** la couche de matériau (24) est attachée à ou à proximité d'un ou plusieurs bord(s) longitudinal(-aux) de la paroi de séparation (11, 19).

9. Echangeur enthalpique selon l'une quelconque des revendications précédentes, **caractérisé en ce que** la couche de matériau (24) est attachée à un cadre qui entoure la paroi de séparation (11, 19).

10. Echangeur enthalpique selon l'une quelconque des revendications précédentes, **caractérisé en ce que** la couche de matériau (24) est constituée d'un tissu tissé.

11. Procédé de refroidissement au point de rosée basé sur un échange enthalpique entre un premier milieu liquide (23) et un second milieu liquide (22) en utilisant un échangeur enthalpique (10) selon l'une quelconque des revendications 1 à 10, ledit échangeur enthalpique comprenant une pluralité de parois de séparation (11, 19) positionnées à une distance les unes des autres, ainsi que des moyens de pressage (40) comprenant une pluralité d'éléments de pressage (40), dans lequel au moins une partie du nombre d'éléments de pressage (40) sont attachés simultanément à une pluralité de parois de séparation (11, 19), le procédé comprenant les étapes suivantes:
a) presser la couche de matériau (24) contre la paroi de séparation (11, 19);
b) mouiller la couche de matériau hygroscopique (24) au moyen d'un premier milieu liquide (23);
c) amener un film de liquide (27) sensiblement ininterrompu à se former entre la couche de matériau (24) et un côté de contact de la paroi de séparation (11, 19); et
d) amener un second milieu (22) à s'écouler le long d'un côté de contact de la paroi de séparation (11, 19) à distance de la couche de matériau (24),
dans lequel un échange enthalpique entre le premier milieu (23) et le second milieu (22) peut se produire par l'intermédiaire de la paroi de séparation (11, 19) et du film de liquide (27).

12. Procédé selon la revendication 11, **caractérisé en ce que** le second milieu (22) est sensiblement gazeux.

13. Procédé selon la revendication 11 ou 12, **caractérisé en ce que** de la chaleur est extraite du second milieu (22) pendant l'exécution du procédé, cette chaleur étant sensiblement transférée au premier milieu (23).

14. Procédé selon l'une quelconque des revendications 11 à 13, **caractérisé en ce qu'**une fraction du second milieu (22) est guidée, après l'échange enthalpique, le long de la couche hygroscopique (24) par l'intermédiaire de la paroi de séparation (11, 19) et du film de liquide (27).
